# EUROPEAN PATENT SPECIFICATION

(11) **EP 1 801 999 B1**
(45) Date of publication and mention of the grant of the patent: **21.12.2016**
(21) Application number: 07104918.3
(22) Date of filing: 20.06.2003
(51) Int. Cl.: H04B 7/04, H04W 16/28

(54) **Method and system for efficiently covering a cell utilising beam forming and sweeping**
Verfahren und System zur effizienten Abdeckung einer Zelle über Strahlformung und Sweeping
Procédé et système pour recouvrir efficacement une cellule en utilisant la formation de faisceaux et le balayage

(30) Priority: 28.06.2002 US 392597 P; 12.11.2002 US 292574
(43) Date of publication of application: 27.06.2007
(62) Divisional of application: 03761964.0
(73) Proprietor: InterDigital Technology Corporation, Wilmington, DE 19809 (US)
(72) Inventor: GOLDBERG, Steven Jeffrey, Downington, PA 19335 (US); CUFFARO, Angelo, Laval Québec H7E 5M7 (CA)
(74) Representative: Awapatent AB

(56) References cited:
- GB-A- 2 281 007
- "3GPP:Beamforming enhancements" 3G TR 25.887 V1.0.0, December 2001 (2001-12), pages 1-9, XP002292510

## Description

### BACKGROUND

Sectoring is a well known technique for providing distinct coverage area from individual cell sites and can be achieved with "smart antenna" technology, which is well known in the art. Smart antenna methods dynamically change the radiation pattern of an antenna to form a "beam," which focuses the antenna's topographical coverage.

Beam forming is an enhancement on sectoring in that the sectors can be adjusted in direction and width. Both techniques are employed to: 1) reduce interference between cells and the user equipment (UE) deployed within the cells; 2) increase the range between a receiver and a transmitter; and 3) locate a UE. These techniques are usually applied to the dedicated channels of the UEs once their general location is known.

Prior to knowing the location of a UE, the common channels broadcast information that all UEs may receive. While this information may be sent in static sectors, it is not sent in variable beams. There are inherent inefficiencies in this approach in that extra steps are required to determine the appropriate beam to use for the dedicated data exchanges. Additionally, the beams must be generally large enough to provide a broad coverage area, which in turn means their power with distance from the transmitter is lower. In such cases, they must use higher power, have longer symbol times and/or more robust encoding schemes to cover the same range.

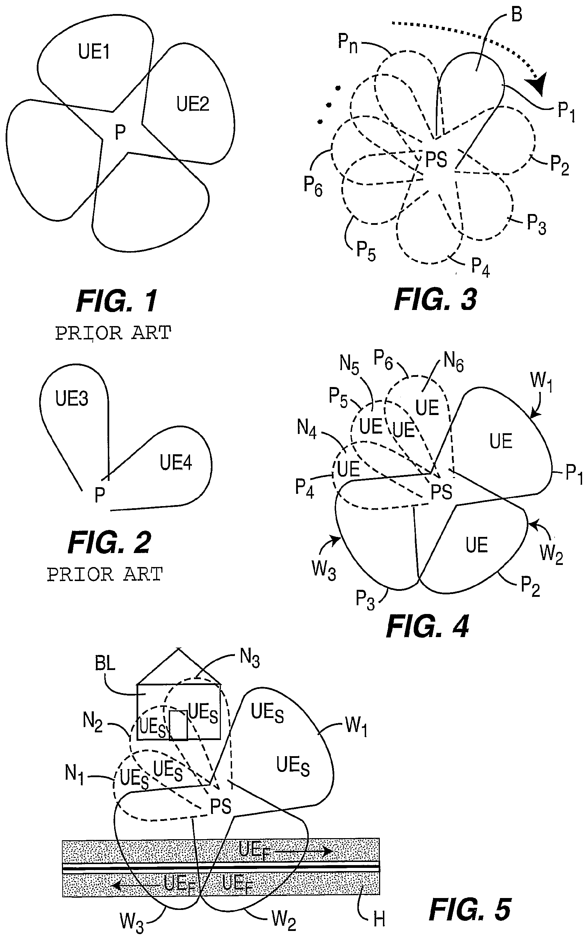

Common channel coverage using a prior art scheme is shown in Figure 1 as four overlapping wide beams. This provides omni-directional coverage, while giving a degree of reuse to the cell site. It also provides a coarse degree of directivity to the UEs (UE1, UE2) detecting one of the transmissions, by having each sector transmit a unique identifier.

Referring to Figure 2, downlink dedicated beams between a primary station (P) and several UEs (UE3, UE4) are shown. Assuming the same power from the primary station (P) for Figures 1 and 2 and all other attributes being equal, the UEs (UE3 and UE4) shown in Figure 2 can be further away from the primary station P than the UEs (UE1, UE2) shown in Figure 1. Alternatively, the coverage areas can be made approximately the same by decreasing the symbol rate and/or increasing the error correction coding. Either of these approaches decreases the data delivery rate. This also applies to the receiver uplink beam patterns of the primary station P; and the same comments about coverage and options apply for data from the UEs to the primary station P.

In the prior art, the range of a primary station P or a UE is generally increased by combinations of higher power, lower symbol rates, error correction coding and diversity in time, frequency or space. However, these methods yield results that fall short of optimized operation. Additionally, there is a mismatch between the common and dedicated communications channels in the ways that coverage is aligned.

The technical report "3rd Generation Partnership Project: Beamforming enhancements" 3B TR 25.887 V1.0.0 (2001-12), pages 1-9, discloses measurement methods for UTRA FDD and their performance requirements for efficient support of RRM when beamforming is used in UTRAN.

There exists a need for efficiently covering a sectorized cell without the drawbacks associated with prior art schemes.

### SUMMARY

A communication system for transmitting and receiving communications between at least one primary station and at least one secondary station in a sectorized cell using at least one beam comprising an antenna. The system includes a device for generating and shaping the beam; and a device for sweeping the shaped beam. The sweeping device selectively directs the shaped beam at a plurality of directions.

Therefore a method and a primary station are respectively defined in claims 1 and 7.

### BRIEF DESCRIPTION OF THE DRAWING(S)

Figure 1 is a prior art common channel coverage scheme between a primary station and several UEs with four overlapping wide beams.
Figure 2 is a prior art scheme of downlink dedicated beams between a primary station and several UEs using dedicated beams.
Figure 3 is a rotating common channel beam emanating from a primary station.
Figure 4 is a beam configuration for known uneven distribution of UEs.
Figure 5 is a beam configuration having beam width adjusted for traffic type.

### DETAILED DESCRIPTION OF THE PREFERRED EMBODIMENTS

The present invention will be described with reference to the drawing figures where like numerals represent like elements throughout. The foregoing statements about beam forming are applicable to both transmission of the signal and its reception. For example, narrower transmission beams cause less interference to those devices outside the beam. Conversely, a narrower reception beam decreases interference from signals outside the beam. The foregoing description of the invention is applicable to both the reception and transmission of signals. The context of a particular part of the description will sometimes explicitly refer to reception or transmission when this is not case.

The common channels are utilized, as their name implies, by all devices. The system and method of the present invention formats these common channels in a fashion that provides useful information to the system and the UE for eventual establishment of the dedicated channels.

Referring to Figure 3, the dashed outlines represent possible positions P₁-Pₙ for a common channel beam B emanating from a primary station (PS). At a particular time period, the beam B exists only in one of the positions P₁ as illustrated by the solid outline. The arrow shows the time sequencing of the beam B. In this illustration, the beam B sequentially moves from one clockwise position P₁ to another P₂-Pₙ, although a clockwise rotation is not necessary.

The system provides for identifying the beam B at each of the positions P₁-Pₙ. A first embodiment for identifying the beam B is to send a unique identifier while the beam B is at in each position P₁-Pₙ. For example, at a first position P₁ a first identifier I₁ will be transmitted, at a second position P₂ a second identifier I₂ will be generated, and so on for each of the positions P₁-Pₙ. If the beam B is swept continuously, a different identifier I₁-Iₘ may be generated for each degree, (or preset number of degrees), of rotation.

A second embodiment for identifying the position P₁-Pₙ of the beam B is to use a time mark as a type of identifier, which the UE returns to the PS. Returning either the time mark (or the identifier) to the PS informs the PS which beam B was detected by the UE. For that time period, the PS now knows the position P₁-Pₙ of the beam B that was able to communicate with the UE. However, it should be noted that due to possible reflections, this is not necessarily the direction of the UE from the PS.

A third embodiment for identifying the position P₁-Pₙ of the beam B is to use time-synchronization. The beam B is positioned and correlated with a known time mark. One way of achieving this would be for both the UEs and the PS to have access to the same time reference, such as the global positioning system (GPS), National Institute of Standards and Technology internet time or radio time broadcasts (WWV) or local clocks with adequate synchronization maintained.

A fourth embodiment for identifying the position P₁-Pₙ of the beam B is for the UEs and the PS to synchronize to timing marks coming from the infrastructure transmissions. The UEs can detect beam transmissions identifying the PS, but not necessarily the individual beam B positions P₁-Pₙ. By the UE reporting back to the PS the time factor when it detected the beam B, the PS can determine which beam B the UE is referencing. The benefit of this embodiment is that the common channel transmission does not have to be burdened with extra data to identify the position P₁-Pₙ of the beam B.

A fifth embodiment for identifying the position of the beam B is to incorporate a GPS receiver within the UE. The UE can then determine its geographical location by latitude and longitude and report this information to the PS. The PS can then use this information to precisely generate the direction of the beam B, beam width and power. Another advantage of this embodiment is the precise location obtained of the UE, which will allow users to locate the UE if the need arises.

Referring to Figure 4, the location pattern may be tailored as desired by the system administrator. In this manner, the PS may position the beam B in a pattern consistent with the expected density of UEs in a particular area. For example, a wide beam W₁, W₂, W₃ may be cast in positions P₁, P₂, P₃, respectively, with few UEs, and more narrow beams N₄, N₅, N₆ cast in positions P₄, P₅, P₆, respectively, with many UEs. This facilitates the creation of narrower dedicated beams B in the denser areas, and also increases the capacity for the uplink and downlink use of the common channels to establish initial communications.

The beam width manipulation is preferably performed in real time. However, the conditions of communication and the nature of the application determine the suitability of number of beam positions P₁-Pₙ and their associated beam width patterns. The beam patterns formed should be sufficiently wide such that the number of UEs entering and leaving the beam can be handled without excessive handoff to other beams. A static device can be serviced by a narrow beam. Swiftly moving cars for example, could not be serviced effectively by a narrow beam perpendicular to the flow of traffic, but could be serviced by a narrow beam parallel to the direction of travel. A narrow perpendicular beam would only be adequate for short message services, not for voice services, such as phone calls.

Another advantage to using different beam widths is the nature of the movement of UEs within a region. Referring to Figure 5, a building BL is shown (representing an area having primarily slower moving pedestrianspeed devices UEₛ), and a highway H is shown (representing an area having primarily faster-moving devices UE_{f}). The slower speed devices UEₛ can be served by narrow beams N₁-N₃ that are likely to be traversed during a communication time period. Alternatively, the faster moving devices UE_{f} require wider beams W₁-W₃ to support a communication.

Beam width shaping also decreases the frequency of handover of UEs from one beam B to another. Handover requires the use of more system resources than a typical communication since two independent communication links are maintained while the handover is occurring. Handover of beams also should be avoided because voice communications are less able to tolerate the latency period often associated with handover.

Data services are packet size and volume dependent. Although a few small packets may be transmitted without problems, a large packet requiring a significant number of handovers may utilize excessive bandwidth. This would occur when links are attempted to be reestablished after a handover. Bandwidth would also be used up when multiple transmissions of the same data is sent in an attempt to perform a reliable transfer.

Downlink common channel communication will often be followed by uplink transmissions. By knowing the transmission pattern of the PS, the UE can determine the appropriate time to send its uplink transmission. To perform the necessary timing, a known fixed or broadcast time relationship is utilized. In the case of a fixed relationship, the UE uses a common timing clock. The UE waits until a predetermined time in which the PS has formed a beam over the UE's sector before transmitting. In the case of a broadcast, the PS informs the UE when to send its uplink signal. The uplink and downlink beam forming may or may not overlap. It is often an advantage to avoid overlap, so that a device responding to a transmission can respond in less time than would be required to wait an entire antenna beam forming timing cycle for the same time slot to occur.

It should be noted that CMDA and other RF protocols utilize some form of time division. When responding to these types of temporal infrastructures, both beam sectoring and the time slots of the protocol would be of concern. Other non-time dependent RF protocols, such as slotted Aloha would only involve sectoring.

The embodiment described hereinbefore was directed to "sweeping" the beam B around a PS in a sequential manner. In many instances this will typically be the most convenient way to implement the invention. There are, however, alternative ways to assume the various positions. For instance, it may be desirable to have more instances of coverage in certain areas. This could be done generating the beam in a sequence of timed positions. For instance, if there are 7 positions, (numbered 1 through 7), a sequence of (1, **2**, 3, 4, **2**, 5, 6, **2**, 7, 1) could be used. This would have the area covered by beam position number 2 more often than other positions, but with the same dwell time. It might also be desirable to have a longer dwell time in a region. The sequence (1, 2, 3, **4**, **4**, 5, 6, 7, 1) for instance would have beam position number 4 remain constant for two time periods. Any suitable sequencing could be utilized and modified as analysis of the situation warranted.

Likewise, it is not necessary to restrict the beam positions to a rotating pattern. The beam positions could be generated in any sequence that serves the operation of the communication system. For example, a pattern that distributed the beams B over time such that each quadrant was covered by at least one beam B might be useful for UEs that are closer to the PS and are likely to be covered by more than one beam position.

It should be noted that similar to all RF transmissions, an RF signal only stops at a physical point if there is a Faraday-type of obstruction, (e.g. grounded metal roof). Usually the signal dies off, and the boundary is some defined attenuation value from the peak value of the transmission. To provide adequate coverage in the application of this invention, it is preferable that adjacent beam positions overlap to some degree. The overlap will tend to be more pronounced closer to the transmission and reception antennas. Close to an infrastructure antenna site, any UE is therefore likely able to communicate via a number of differently positioned beams B. Devices able to communicate via several beam positions could therefore, if needed, achieve higher data rates using these multiple positions. Devices further away, however, are more likely to be able to communicate via only once instant of beaming, and to obtain higher data rates would require another technique such as a longer dwell time.

### ASPECTS

Aspect 1. A communication system for transmitting and receiving communications between at least one primary station and at least one secondary station, the system covering a sectorized cell using at least one beam comprising:
   means for generating and shaping a beam;
   an antenna for transmitting and receiving signals within said beam; and
   means for directing said beam; whereby said sweeping means selectively directs the shaped beam at a plurality of directions.
Aspect 2. The system of aspect 1 wherein said antenna receives a communication.
Aspect 3. The system of aspect 1 wherein said antenna transmits a communication.
Aspect 4. The system of aspect 1 wherein said shaping means shapes the beams into one of a plurality of selectable widths, from a wide width to a narrow width.
Aspect 5. The system of aspect 1 wherein said plurality of directions coincide with the sectors of the cell.
Aspect 6. The system of aspect 5 wherein the cell sectors are different sizes and said shaping means shapes the beams to cover the cell sectors.
Aspect 7. The system of aspect 1 wherein said sweeping means selectively directs the shaped beams at the plurality of directions in a predetermined sequence.
Aspect 8. The system of aspect 7 wherein said sequence is consecutive.
Aspect 9. The system of aspect 7 wherein said sequence is non-sequential.
Aspect 10. The system of aspect 9 wherein said non-sequential sequence causes the sweeping means to selectively direct the beam toward at least one of the plurality of directions more frequenly than the other plurality of directions.
Aspect 11. The system of aspect 9 wherein said non-consecutive sequence causes the sweeping means to selectively direct the beam at some of the plurality of directions for a longer duration than others of the plurality of directions.
Aspect 12. A system for facilitating the transmission and reception of communications between at least one primary station and at least one secondary station, the system covering a sectorized cell using at least one beam comprising:
   an antenna, for generating a beam for transmitting a communication and for receiving a communication;
   means for shaping the beam; and
   means for sweeping the shaped beam; whereby said sweeping means selectively directs the shaped beam at a plurality of directions.
Aspect 13. The system of aspect 12 wherein said antenna receives a communication.
Aspect 14. The system of aspect 12 wherein said antenna transmits a communication.
Aspect 15. The system of aspect 12 wherein said shaping means shapes the beams into one of a plurality of selectable widths, from a wide width to a narrow width.
Aspect 16. The system of aspect 12 wherein said plurality of directions coincide with the sectors of the cell.
Aspect 17. The system of aspect 16 wherein the cell sectors are different sizes and said shaping means shapes the beams to cover the cell sectors.
Aspect 18. The system of aspect 12 wherein said sweeping means selectively directs the shaped beams at the plurality of directions in a predetermined sequence.
Aspect 19. The system of aspect 18 wherein said sequence is consecutive.
Aspect 20. The system of aspect 18 wherein said sequence is non-sequential.
Aspect 21. The system of aspect 20 wherein said non-sequential sequence causes the sweeping means to selectively direct the beam toward at least one of the plurality of directions more frequenly than the other plurality of directions.
Aspect 22. The system of aspect 20 wherein said non-consecutive sequence causes the sweeping means to selectively direct the beam at some of the plurality of directions for a longer duration than others of the plurality of directions.

## Claims

1. A method for use in a primary station (PS) for coordinating wireless communication with at least one secondary station, the primary station including means for producing at least one directional antenna beam (B), the method being **characterized by**:
the primary station selectively shaping the at least one directional antenna beam (B);
the primary station directing the shaped directional antenna beam (B) to a plurality (P1,P2,...,Pn) of directions; and
the primary station identifying the shaped directional antenna beam (B) in accordance with each of the plurality of directions.

2. The method of claim 1, wherein selectively shaping the at least one directional antenna beam (B) includes shaping the at least one directional antenna beam (B) into a plurality of selectable widths.

3. The method of claim 1, wherein directing the shaped directional antenna beam (B) to a plurality of directions includes directing the at least one shaped directional antenna beam (B) toward at least one of the plurality of directions more frequently than the other plurality of directions.

4. The method of claim 1, wherein directing the shaped directional antenna beam (B) to a plurality of directions includes directing the at least one shaped directional antenna beam (B) to some of the plurality of directions for a longer duration than the other plurality of directions.

5. The method of claim 1, further comprising:
determining, by the primary station, a future density of secondary stations and dynamically adjusting a beam direction based on the determined future density of secondary stations.

6. The method of claim 1, further comprising:
transmitting a beam direction pattern from the primary station to the at least one secondary station for synchronizing uplink transmissions.

7. A primary station (PS) for wireless communication with at least one secondary station, the primary station being **characterized by**:
means for producing at least one directional antenna beam (B);
means for selectively shaping the at least one directional antenna beam (B);
means for directing the shaped directional antenna beam (B) to a plurality (P1,P2,...,Pn) of directions; and
means for identifying the shaped directional antenna beam (B) in accordance with each of the plurality of directions.

8. The primary station of claim 7, wherein the means for selectively shaping the at least one directional antenna beam (B) is arranged to shape the at least one directional antenna beam (B) into a plurality of selectable widths.

9. The primary station of claim 7, wherein the means for directing the shaped directional antenna beam (B) to a plurality of directions is arranged to direct the at least one shaped directional antenna beam (B) toward at least one of the plurality of directions more frequently than the other plurality of directions.

10. The primary station of claim 7, wherein the means for directing the shaped directional antenna beam (B) to a plurality of directions is arranged to direct the at least one shaped directional antenna beam (B) to some of the plurality of directions for a longer duration than the other plurality of directions.

11. The primary station of claim 7, further including means for determining a future density of secondary stations and for dynamically adjusting a beam direction based on the determined future density of secondary stations.

12. The primary station of claim 7, further including means for transmitting a beam direction pattern from the primary station to the at least one secondary station for synchronizing uplink transmissions.

## Patentansprüche

1. Verfahren zur Verwendung in einer Primärstation (PS) zum Koordinieren von drahtloser Kommunikation mit mindestens einer Sekundärstation, wobei die Primärstation ein Mittel zum Erzeugen mindestens eines Richtantennenstrahls (B) enthält, wobei das Verfahren **dadurch gekennzeichnet ist, dass**:
die Primärstation selektiv den mindestens einen Richtantennenstrahl (B) formt;
die Primärstation den geformten Richtantennenstrahl (B) in mehrere (P1, P2 ..., Pn) Richtungen richtet; und
die Primärstation den geformten Richtantennenstrahl (B) gemäß jeder der mehreren Richtungen identifiziert.

2. Verfahren nach Anspruch 1, wobei das selektive Formen des mindestens einen Richtantennenstrahls (B) das Formen des mindestens einen Richtantennenstrahls (B) in mehrere wählbare Breiten enthält.

3. Verfahren nach Anspruch 1, wobei das Richten des geformten Richtantennenstrahls (B) in mehrere Richtungen enthält, den mindestens einen geformten Richtantennenstrahl (B) in mindestens eine der mehreren Richtungen häufiger zu richten als in die anderen mehreren Richtungen.

4. Verfahren nach Anspruch 1, wobei das Richten des geformten Richtantennenstrahls (B) in mehrere Richtungen enthält, den mindestens einen geformten Richtantennenstrahl (B) in einige der mehreren Richtungen über eine längere Dauer zu richten als in die anderen mehreren Richtungen.

5. Verfahren nach Anspruch 1, das des Weiteren Folgendes umfasst:
Bestimmen, durch die Primärstation, einer künftigen Dichte von Sekundärstationen und dynamisches Justieren einer Strahlrichtung auf der Basis der bestimmten künftigen Dichte von Sekundärstationen.

6. Verfahren nach Anspruch 1, das des Weiteren Folgendes umfasst:
Übertragen eines Strahlrichtungsmusters von der Primärstation zu der mindestens einen Sekundärstation zum Synchronisieren von Uplink-Übertragungen.

7. Primärstation (PS) zur drahtlosen Kommunikation mit mindestens einer Sekundärstation, wobei die Primärstation **gekennzeichnet ist durch**:
ein Mittel zum Erzeugen mindestens eines Richtantennenstrahls (B);
ein Mittel zum selektiven Formen des mindestens einen Richtantennenstrahls (B);
ein Mittel zum Richten des geformten Richtantennenstrahls (B) in mehrere (P1, P2 ..., Pn) Richtungen; und
ein Mittel zum Identifizieren des geformten Richtantennenstrahls (B) gemäß jeder der mehreren Richtungen.

8. Primärstation nach Anspruch 7, wobei das Mittel zum selektiven Formen des mindestens einen Richtantennenstrahls (B) dafür ausgelegt ist, den mindestens einen Richtantennenstrahl (B) in mehrere wählbare Breiten zu formen.

9. Primärstation nach Anspruch 7, wobei das Mittel zum Richten des geformten Richtantennenstrahls (B) in mehrere Richtungen dafür ausgelegt ist, den mindestens einen geformten Richtantennenstrahl (B) in mindestens eine der mehreren Richtungen häufiger zu richten als in die anderen mehreren Richtungen.

10. Primärstation nach Anspruch 7, wobei das Mittel zum Richten des geformten Richtantennenstrahls (B) in mehrere Richtungen dafür ausgelegt ist, den mindestens einen geformten Richtantennenstrahl (B) in einige der mehreren Richtungen über eine längere Dauer zu richten als in die anderen mehreren Richtungen.

11. Primärstation nach Anspruch 7, die des Weiteren ein Mittel zum Bestimmen einer künftigen Dichte von Sekundärstationen und zum dynamischen Justieren einer Strahlrichtung auf der Basis der bestimmten künftigen Dichte von Sekundärstationen enthält.

12. Primärstation nach Anspruch 7, die des Weiteren ein Mittel zum Übertragen eines Strahlrichtungsmusters von der Primärstation zu der mindestens einen Sekundärstation zum Synchronisieren von Uplink-Übertragungen enthält.

## Revendications

1. Procédé destiné à être utilisé dans une station primaire (PS) pour coordonner une communication sans fil avec au moins une station secondaire, la station primaire comprenant des moyens pour produire au moins un faisceau d'antenne directionnel (B), le procédé étant **caractérisé par** :
la station primaire effectue la mise en forme sélective de l'au moins un faisceau d'antenne directionnel (B) ;
la station primaire effectue la direction du faisceau d'antenne directionnel mis en forme (B) dans une pluralité de sens (P1, P2, ..., Pn) ; et
la station primaire effectue l'identification du faisceau d'antenne directionnel mis en forme (B) en fonction de chacun de la pluralité de sens.

2. Procédé selon la revendication 1, dans lequel la mise en forme sélective de l'au moins un faisceau d'antenne directionnel (B) comprend la mise en forme de l'au moins un faisceau d'antenne directionnel (B) dans une pluralité de largeurs sélectionnables.

3. Procédé selon la revendication 1, dans lequel la direction du faisceau d'antenne directionnel mis en forme (B) dans une pluralité de sens comprend la direction de l'au moins un faisceau d'antenne directionnel mis en forme (B) dans au moins l'un de la pluralité de sens plus fréquemment que dans les autres de la pluralité de sens.

4. Procédé selon la revendication 1, dans lequel la direction du faisceau d'antenne directionnel mis en forme (B) dans une pluralité de sens comprend la direction de l'au moins un faisceau d'antenne directionnel mis en forme (B) dans certains de la pluralité de sens pendant une durée plus grande que pour les autres de la pluralité de sens.

5. Procédé selon la revendication 1, comprenant en outre :
la détermination, par la station primaire, d'une densité future de stations secondaires et l'ajustement dynamique d'un sens de faisceau sur la base de la densité future déterminée de stations secondaires.

6. Procédé selon la revendication 1, comprenant en outre :
la transmission d'un motif de sens de faisceau de la station primaire à l'au moins une station secondaire pour la synchronisation de transmissions de liaison montante.

7. Station primaire (PS) pour coordonner une communication sans fil avec au moins une station secondaire, la station primaire étant **caractérisée par** :
des moyens pour produire au moins un faisceau d'antenne directionnel (B) ;
des moyens de mise en forme sélective de l'au moins un faisceau d'antenne directionnel (B) ;
des moyens de direction du faisceau d'antenne directionnel mis en forme (B) dans une pluralité de sens (P1, P2, ..., Pn) ; et
des moyens d'identification du faisceau d'antenne directionnel mis en forme (B) en fonction de chacun de la pluralité de sens.

8. Station primaire selon la revendication 7, dans laquelle les moyens de mise en forme sélective de l'au moins un faisceau d'antenne directionnel (B) sont agencés pour effectuer la mise en forme de l'au moins un faisceau d'antenne directionnel (B) dans une pluralité de largeurs sélectionnables.

9. Station primaire selon la revendication 7, dans laquelle les moyens de direction du faisceau d'antenne directionnel mis en forme (B) dans une pluralité de sens sont agencés pour effectuer la direction de l'au moins un faisceau d'antenne directionnel mis en forme (B) dans au moins l'un de la pluralité de sens plus fréquemment que dans les autres de la pluralité de sens.

10. Station primaire selon la revendication 7, dans laquelle les moyens de direction du faisceau d'antenne directionnel mis en forme (B) dans une pluralité de sens sont agencés pour effectuer la direction de l'au moins un faisceau d'antenne directionnel mis en forme (B) dans certains de la pluralité de sens pendant une durée plus grande que pour les autres de la pluralité de sens.

11. Station primaire selon la revendication 7, comprenant en outre des moyens pour effectuer la détermination d'une densité future de stations secondaires et l'ajustement dynamique d'un sens de faisceau sur la base de la densité future déterminée de stations secondaires.

12. Station primaire selon la revendication 7, comprenant en outre des moyens pour effectuer la transmission d'un motif de sens de faisceau de la station primaire à l'au moins une station secondaire pour la synchronisation de transmissions de liaison montante.
